# EUROPÄISCHE PATENTSCHRIFT

(11) **EP 0 394 790 B1**
(45) Veröffentlichungstag und Bekanntmachung des Hinweises auf die Patenterteilung: **24.03.1993**
(21) Anmeldenummer: 90107139.9
(22) Anmeldetag: 13.04.1990
(51) Int. Cl.: B29B 7/76

(54) **Vorrichtung zum Erzeugen eines fliessfähigen Reaktionsgemisches aus mindestens zwei fliessfähigen Reaktionskomponenten für die Herstellung von massiven oder zelligen Kunststoffen**
Device for making a fluid reactive mixture from at least two fluid reactive components for making solid or cellular plastic material
Dispositif pour la fabrication d'un mélange réactif apte à couler à partir d'au moins deux composants réactifs aptes à couler pour la fabrication de matières plastiques massives ou cellulaires

(30) Priorität: 26.04.1989 DE 3913681
(43) Veröffentlichungstag der Anmeldung: 31.10.1990
(73) Patentinhaber: MASCHINENFABRIK HENNECKE GmbH, D-51379 Leverkusen (DE)
(72) Erfinder: Proksa, Ferdinand, Dr., D-5090 Leverkusen 3 (DE); Sulzbach, Hans-Michael, Dipl.-Ing., D-5330 Königswinter 21 (DE); Althausen, Ferdinand, D-5206 Neunkirchen 1 (DE); Raffel, Reiner, Dipl.-Ing., D-5200 Siegburg (DE)
(74) Vertreter: Kirchner, Dietrich, Dr.

(56) Entgegenhaltungen:
- DE-A- 3 014 175
- DE-A- 3 334 375
- FR-A- 2 096 522

## Beschreibung

Die Erfindung betrifft eine Vorrichtung zum Erzeugen eines fließfähigen Reaktionsgemisches aus mindestens zwei fließfähigen Reaktionskomponenten für die Herstellung von massiven oder zelligen Kunststoffen, bestehend aus Vorratsbehältern für die Reaktionskomponenten, von denen Zuleitungen über Dosierpumpen zu einem Mischkopf führen, in dessen Mischkammer sie über Einspritzdüsen einmünden, wobei jede der Einspritzdüsen aus einem Düsengehäuse und einer Düsennadel besteht, welche miteinander an der Düsenöffnung im Schließzustand einen Dichtsitz bilden.

Die bisher verwendeten Sitzdüsen haben den Nachteil, daß die hydraulische Umsteuerung von dem auf die Düsennadel einwirkenden Gegendruck abhängig ist d.h., bei Veränderung des Komponentendruckes ändert sich auch die Beschleunigung der Düsennadeln beim Öffnen und Schließen. Hierdurch kann während der kritischen Phasen des Öffnens und Schließens der Einspritzdüsen das Mischungsverhältnis der Reaktionskomponenten nachteilig verändert werden, wodurch unerwünschte Fehlerstellen im Endprodukt entstehen.

Es besteht somit die Aufgabe, eine Vorrichtung zu schaffen, deren Einspritzdüsen - zumindest weitgehend - unabhängig vom Gegendruck der durch sie gesteuerten Reaktionskomponenten arbeiten.

Diese Aufgabe wird dadurch gelöst, daß dem hinteren Ende der Düsennadel eine Kammer zugeordnet ist, welche mit der Zuleitung der Reaktionskomponente verbunden ist, und daß die Düsennadel in dieser Kammer mit einer in Schließrichtung beaufschlagbaren Fläche versehen ist, deren Projektionsfläche in Bewegungsrichtung maximal das 1,1-fache der von der Reaktionskomponente in Öffnungsrichtung beaufschlagbaren Projektionsfläche der Düsennadel beträgt.

Auf diese Weise wird erreicht, daß beim Umsteuern die durch den Gegendruck der Reaktionskomponente auf die Düsennadel wirkende Axialkraft so weit minimiert wird, daß eine Änderung des Komponentendrucks die Beschleunigung der Düsennadel weder beim Öffnen noch beim Schließen gravierend beeinflussen kann. Da bei dieser Ausführungsform die Schließkraft die Öffnungskraft noch geringfügig überwiegt, ist sichergestellt, daß bei einem Ausfall der hydraulischen Steuerung der Düsennadeln selbst während eines Spritzvorgangs die Einspritzdüsen nicht endlos weiterspritzen, sondern sich selbsttätig schließen. Die neuartige Einspritzdüse kommt mit Hydraulikantrieben weit kleinerer Bauweise aus als herkömmlich, so daß Düsenöffnungsdurchmesser von weit über 10 mm möglich sind.

Unerwünschte Veränderungen des Verhältnisses der Reaktionskomponenten während der Umsteuerphasen der Einspritzdüsen, d.h. zu Beginn und Ende des Mischvorganges, wodurch Fehlerstellen im Endprodukt entstehen könnten, sind durch diese Düsenbauform ebenfalls ausgeschlossen, weil nahezu die gleiche Komponentenmenge pro Zeiteinheit, die auf der Stirnseite der Düsennadel durch die Bewegung der Düsennadel zu- bzw. weggepumpt wird, auf der Rückseite der Düsennadel wieder ausgeglichen wird.

Gemäß einer besonderen Ausführungsform sind die einander entgegengerichteten Projektionsflächen gleich groß. In diesem Fall wird durch den Arbeitsdruck der Reaktionskomponente überhaupt keine Axialkraft mehr auf die Düsennadel ausgeübt. Des weiteren wird der Pumpeffekt der sich in der Umsteuerphase bewegenden Düsennadel völlig eliminiert. Ein selbsttätiges Schließen der Düsen bei Ausfall der hydraulischen Steuerung während eines Spritzvorgangs ist dann jedoch nicht mehr möglich. Ein unkontrolliertes Weiterspritzen der Düsen muß dann mit anderen Mitteln verhindert werden, z.B. Überwachung der Hydraulik und Abschalten der Dosierorgane.

Die neuartige Ausgestaltung der Vorrichtung läßt sich auch auf solche Mischköpfe anwenden, welche mit Mehrstoffdüsen, insbesondere Zweistoffdüsen, arbeiten. Derartige Mehrstoffdüsen sind aus US-A-4 582 224 und US-A-4 749 554 bekannt.

Dabei sind die Düsennadeln für die zweite und gegebenenfalls weitere Reaktionskomponente(n) als die erste Düsennadel konzentrisch umgebende, hülsenartige Nadeln (Hülsennadeln) ausgebildet.

In der Zeichnung sind verschiedene Ausführungsformen der neuen Vorrichtung rein schematisch dargestellt und nachstehend näher erläutert. Es zeigen:
- Fig. 1: die Vorrichtung im schematischen Aufbau mit zwei angedeuteten Einspritzdüsen,
- Fig. 2: eine Einspritzdüse der Vorrichtung gemäß Fig. 1 in vergrößerter, detaillierter Darstellung im Schnitt,
- Fig. 3: eine andere Ausführungsform der Einspritzdüse gemäß Fig. 1,
- Fig. 4: die Vorrichtung im schematischen Aufbau mit einer Zweistoffdüse und
- Fig. 5: die Zweistoffdüse gemäß Fig. 4 in vergrößerter, detaillierter Darstellung im Schnitt.

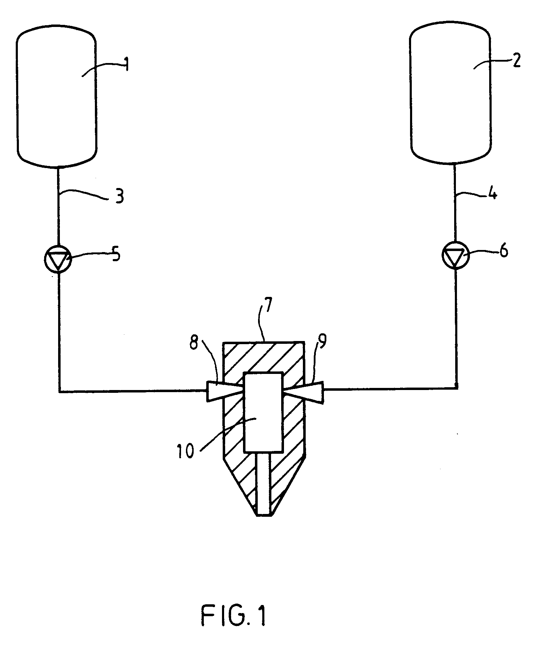

In Fig. 1 besteht die Vorrichtung aus Vorratsbehältern 1, 2, von denen Zuleitungen 3, 4 über Dosierpumpen 5, 6 zu einem Mischkopf 7 führen. Die Zuleitungen 3, 4 münden über gleichartig aufgebaute, hier nur angedeutete Einspritzdüsen 8, 9 in eine Mischkammer 10.

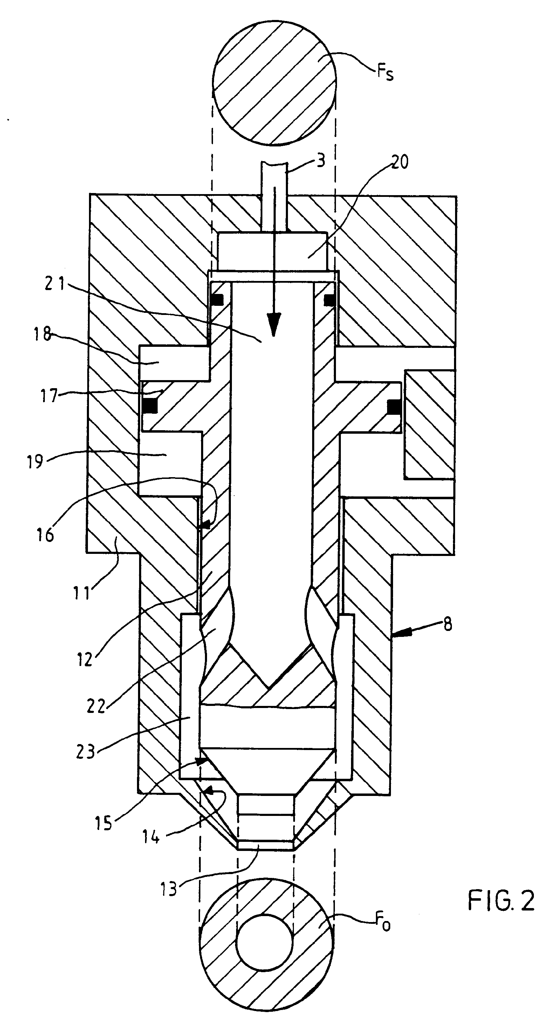

In Fig. 2 besteht die Einspritzdüse 8 aus einem Düsengehäuse 11 und einer Düsennadel 12. Im Düsengehäuse 11 ist eine Düsenöffnung 13 angeordnet, welche von einer Sitzfläche 14 konzentrisch umgeben ist. Diese korrespondiert mit einer Sitzfläche 15 der Düsennadel 12. Die Düsennadel 12 ist in einer Bohrung 16 geführt und weist einen doppelseitig beaufschlagbaren Kolben 17 auf, welchem beidseitig Hydraulikkammern 18, 19 zugeordnet sind. Diese sind mit einer (nicht dargestellten) hydraulischen Steuerung verbunden. Die Zuleitung 3 mündet in eine der Bohrung 16 bzw. der Düsennadel 12 vorgeordnete Kammer 20. Die Düsennadel 12 besitzt eine zentrale, zur Kammer 20 offene Bohrung 21, von welcher Kanäle 22 in eine den vorderen Bereich der Düsennadel 12 umgebende Kammer 23 münden. Ein verstellbarer Anschlag zum Einstellen der Hubhöhe der Düsennadel 12 ist nicht dargestellt. Umschaltorgane und Rücklaufleitungen, mit welchen die Zuleitung 3 bzw. Düsenöffnung 13 in Pausenzeiten verbunden werden kann, sind ebenfalls nicht dargestellt. Die bei Druckbeaufschlagung beim Öffnen wirksame Projektionsfläche Fₒ der Sitzfläche 15 der Düsennadel 12 beträgt ca. das 0,9-fache der beim Schließen wirksamen Projektionsfläche Fₛ. Durch diese Bemessung der Flächen Fₒ und Fₛ wird die durch den Druck der Reaktionskomponente auf die Düsennadel wirkende Axialkraft so weit minimiert, daß eine Änderung des Komponentendrucks die Beschleunigung der Düsennadel weder beim Öffnen noch beim Schließen gravierend beeinflussen kann. Vorteilhaft ist auch, daß bei Ausfall der Steuerhydraulik während eines Spritzvorgangs die Einspritzdüse selbsttätig schließt.

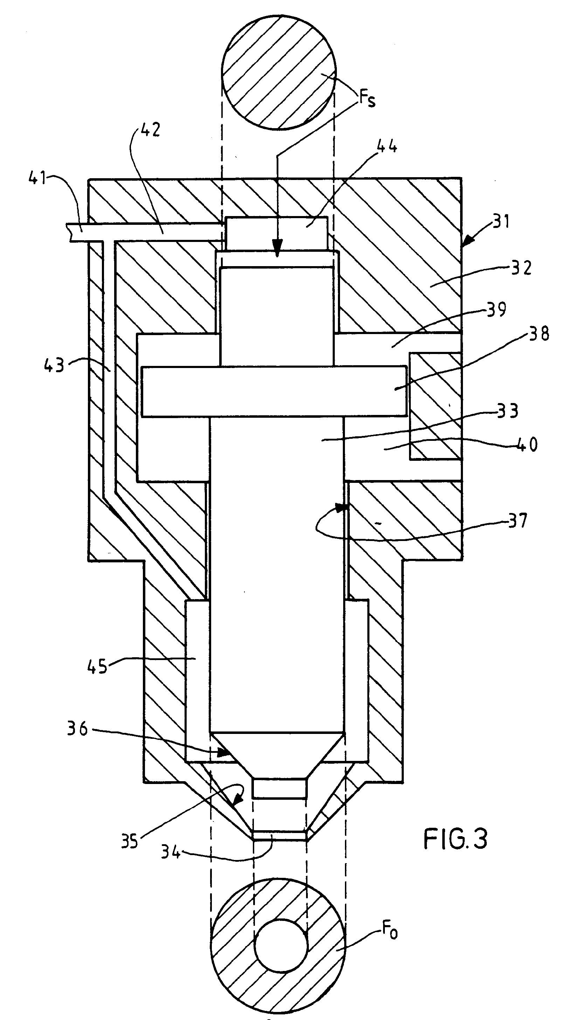

In Fig. 3 besteht die Einspritzdüse 31 aus einem Düsengehäuse 32 und einer Düsennadel 33. Im Düsengehäuse 32 ist eine Düsenöffnung 34 angeordnet, welche von einer Sitzfläche 35 konzentrisch umgeben ist. Diese Sitzfläche 35 korrespondiert mit einer Sitzfläche 36 der Düsennadel 33. Die Düsennadel 33 ist in einer Bohrung 37 geführt und weist einen beidseitig hydraulisch beaufschlagbaren Kolben 38 auf, welchem beidseitig Hydraulikkammern 39, 40 zugeordnet sind, welche mit einer (nicht dargestellten) hydraulischen Steuerung verbunden sind. Eine Zuleitung 41 für die Reaktionskomponente verzweigt sich in zwei Kanäle 42, 43, von denen der Kanal 42 in eine dem hinteren Ende der Düsennadel 33 zugeordnete Kammer 44 mündet, während der Kanal 43 in eine den vorderen Bereich der Düsennadel 33 umgebende Kammer 45 mündet. Ein verstellbarer Anschlag zum Einstellen der Hubhöhe der Düsennadel 33 ist nicht dargestellt. Die Projektionsfläche Fₒ der Sitzfläche 36 der Düsennadel 33 besitzt die 0,9-fache Größe der hinteren Stirnfläche Fₛ der Düsennadel 33, wodurch die gleiche Wirkung erzielt wird, wie zu der Einspritzdüse gemäß Fig. 2 beschrieben.

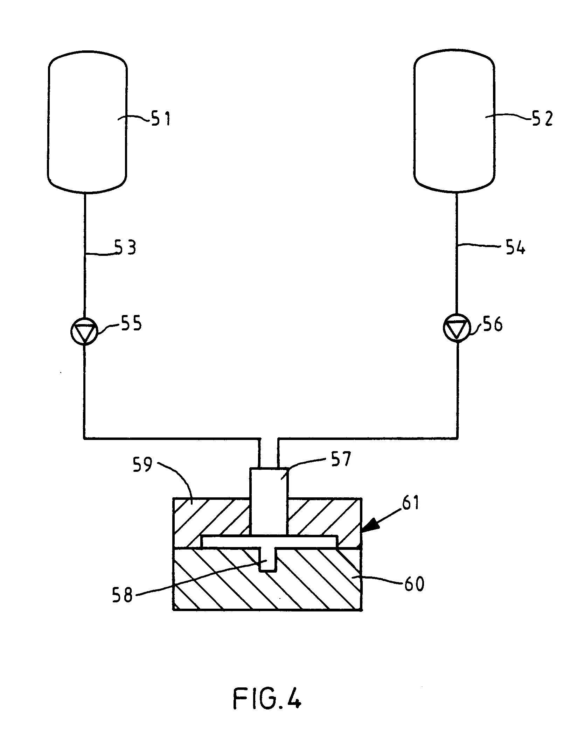

In Fig. 4 besteht die Vorrichtung aus Vorratsbehältern 51, 52, von denen Zuleitungen 53, 54 über Dosierpumpen 55, 56 zu einer Zweistoffdüse 57 führen, welche in eine Mischkammer 58 öffnet. Dabei sind die Zweistoffdüse 57 in der einen Hälfte 59 und die Mischkammer 58 in der anderen Hälfte 60 des Formwerkzeuges 61 angeordnet.

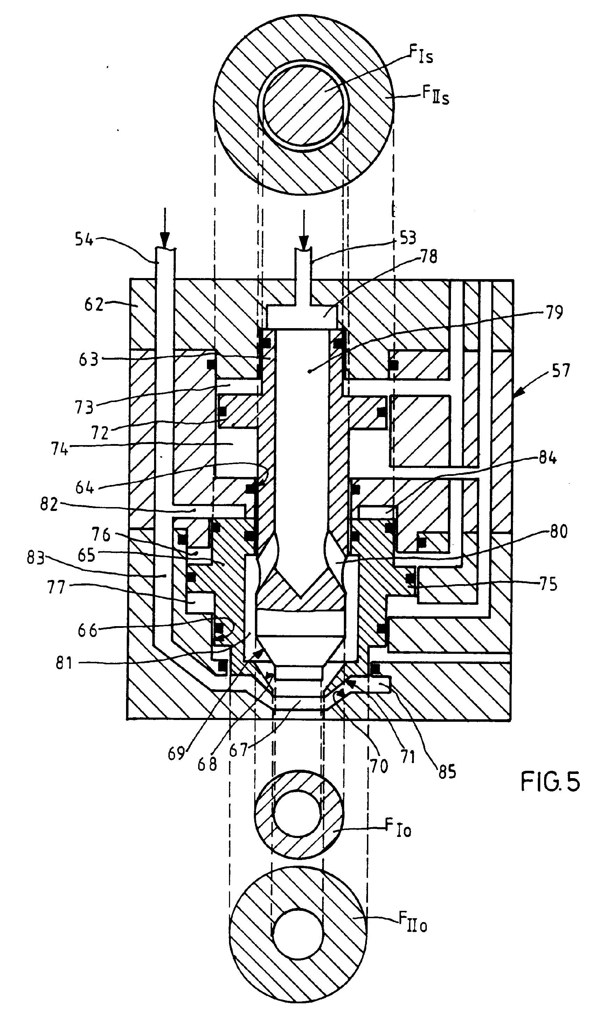

Diese Zweistoffdüse 57, durch welche beide Reaktionskomponenten in die Mischkammer 58 injiziert werden, ist gemäß Fig. 5 wie folgt aufgebaut, wobei ihr Aufbau zum Einspritzen der ersten Reaktionskomponente dem Prinzip nach mit dem Aufbau der Einspritzdüse gemäß Fig. 2 übereinstimmt: In einem Düsengehäuse 62 sind eine Düsennadel 63 in einer Bohrung 64 und eine konzentrisch dazu angeordnete Hülsennadel 65 in einer Bohrung 66 geführt. Düsengehäuse 62 und Hülsennadel 65 weisen eine gemeinsame Düsenöffnung 67 auf. Die Hülsennadel 65 ist innen mit einer Sitzfläche 68 versehen, welche mit einer Sitzfläche 69 der Düsennadel 63 korrespondiert. Das Düsengehäuse 62 weist ebenfalls eine Sitzfläche 70 auf, welche mit einer außen an der Hülsennadel 65 angeordneten Sitzfläche 71 korrespondiert. Die Düsennadel 63 weist einen beidseitig hydraulisch beaufschlagbaren Kolben 72 auf, welchem Hydraulikkammern 73, 74 zugeordnet sind. Diese sind mit einer (nicht dargestellten) hydraulischen Steuerung verbunden. Die Hülsennadel 65 ist ebenfalls mit einem hydraulisch beaufschlagbaren Kolben 75 versehen, welchem Hydraulikkammern 76, 77 zugeordnet sind. Auch diese sind mit der hydraulischen Umsteuerung verbunden. Die Zuleitung 53 für die erste Reaktionskomponente mündet in eine Kammer 78, welche dem hinteren Ende der Düsennadel 63 zugeordnet ist. Die Kammer 78 ist über eine Bohrung 79 und Kanäle 80 mit einer den vorderen Bereich der Düsennadel 63 umgebenden Kammer 81 verbunden. Die Zuleitung 54 für die zweite Reaktionskomponente verzweigt sich zu Kanälen 82 und 83, von denen der Kanal 82 in eine dem hinteren Ende der Düsennadel 63 zugeordnete Kammer 84 mündet, während der Kanal 83 zu einer die Düsenöffnung 67 konzentrisch umgebende Kammer 85 führt. Die bei Druckbeaufschlagung mit der ersten Reaktionskomponente beim Öffnen wirksame Projektionsfläche F_{Io} der Sitzfläche 69 der Düsennadel 63 besitzt ca. die 0,9-fache Größe der beim Schließen wirksamen Projektionsfläche F_{Is} des hinteren Endes der Düsennadel 63. Die Projektionsfläche F_{IIo} der Sitzfläche 71 der Hülsennadel 65 besitzt ebenfalls ca. die 0,9-fache Größe der beim Schließen wirksamen Fläche F_{IIs} des hinteren Endes der Hülsennadel 65. Durch diese Bemessungen treten die zu Fig. 2 beschriebenen Wirkungen ein. Rücklaufleitungen, mit welchen die Zuleitungen 78, 83 in Pausenzeiten verbunden werden können, sind ebenfalls nicht dargestellt.

## Patentansprüche

1. Vorrichtung zum Erzeugen eines fließfähigen Reaktionsgemisches aus mindestens zwei fließfähigen Reaktionskomponenten für die Herstellung von massiven oder zelligen Kunststoffen, bestehend aus Vorratsbehältern (1, 2; 51, 52) für die Reaktionskomponenten, von denen Zuleitungen (3, 4; 41; 53, 54) über Dosierpumpen (5, 6; 55, 56) zu einem Mischkopf (7) führen, in dessen Mischkammer (10; 58) sie über Einspritzdüsen (8, 9; 31; 57) einmünden, wobei jede der Einspritzdüsen (8, 9; 31; 57) aus einem Düsengehäuse (11; 32; 62) und einer Düsennadel (12; 33; 63, 65) besteht, welche miteinander an der Düsenöffnung (13; 34; 67) im Schließzustand einen Dichtsitz (14, 15; 35, 36; 68, 69, 70, 71) bilden, dadurch gekennzeichnet, daß dem hinteren Ende der Düsennadel (12; 33; 63, 65) eine Kammer (20; 44; 78, 84) zugeordnet ist, welche mit der Zuleitung (3, 4; 41; 53, 54) der Reaktionskomponente verbunden ist, und daß die Düsennadel (12; 33; 63, 65) in dieser Kammer (20; 44; 78, 84) mit einer in Schließrichtung beaufschlagbaren Fläche versehen ist, deren Projektionsfläche (Fₛ; F_{Is}, F_{IIs}) in Bewegungsrichtung maximal das 1,1-fache der von der Reaktionskomponente in Öffnungsrichtung beaufschlagbaren Projektionsfläche (Fₒ; F_{Io}, F_{IIo}) der Düsennadel (12; 33; 63, 65) beträgt.

2. Vorrichtung nach Anspruch 1, dadurch gekennzeichnet, daß die einander entgegengerichteten Projektionsflächen (Fₛ; F_{Is}, F_{IIs} bzw. Fₒ; F_{Io}, F_{IIo}) gleich groß sind.

3. Vorrichtung nach Anspruch 1 oder 2, dadurch gekennzeichnet, daß die Einspritzdüsen aus einer gemeinsamen Mehrstoffdüse (57) bestehen, wobei die Düsennadeln für die zweite und gegebenenfalls weitere Reaktionskomponente(n) als die Düsennadel (63) für die erste Reaktionskomponente konzentrisch umgebende Hülsennadeln (65) ausgebildet sind.

## Claims

1. A device for producing a flowable reaction mixture from at least two flowable reaction components for the production of solid or cellular plastics, comprising supply containers (1, 2; 51, 52) for the reaction components, from which supply lines (3, 4; 41; 53, 54) lead via dosing pumps (5, 6; 55, 56) to a mixing head (7), said supply lines opening into the mixing chamber (10; 58) of said mixing head via injection nozzles (8, 9; 31; 57), where each of the injection nozzles (8, 9; 31; 57) consists of a nozzle housing (11; 32; 62) and a nozzle needle (12; 33; 63, 65) which together form a sealing seat (14, 15; 35, 36; 68, 69, 70, 71) at the nozzle opening (13; 34; 67) in the closed state, characterised in that the rear end of the nozzle needle (12; 33; 63, 65) is assigned a chamber (20; 44; 78, 84) which is connected to the supply line (3, 4; 41; 53, 54) of the reaction component, and that the nozzle needle (12; 33; 63, 65) is provided in this chamber (20; 44; 78, 84) with a surface which can be acted upon in the closing direction and whose surface of projection (Fₛ; F_{Is}, F_{IIs}) in the direction of movement amounts at the maximum to 1.1 times the surface of projection (Fₒ; F_{Io}, F_{IIo}), which can be acted upon by the reaction component in the opening direction, of the nozzle needle (12; 33; 63, 65).

2. A device as claimed in Claim 1, characterised in that the opposing surfaces of projection (Fₛ; F_{Is}, F_{IIs} and Fₒ; F_{Io}, F_{IIo}) are of equal size.

3. A device as claimed in Claim 1 or 2, characterised in that the injection nozzles consist of a common, compound nozzle (57), where the nozzle needles for the second and optionally further reaction component(s) are designed as sleeve needles (65) which concentrically surround the nozzle needle (63) for the first reaction component.

## Revendications

1. Dispositif de production d'un mélange réactionnel fluide consistant en au moins deux composants réactionnels fluides pour la production de matières plastiques pleines ou cellulaires, dispositif constitué de réservoirs (1, 2 ; 51, 52) des composants réactionnels, dont des conduits (3, 4 ; 41 ; 53, 54) aboutissent par l'intermédiaire de pompes doseuses (5, 6 ; 55, 56) à une tête mélangeuse (7), dans la chambre de mélange (10 ; 58) de laquelle ils débouchent par des buses d'injection (8, 9 ; 31 ; 57), chacune des buses d'injection (8, 9 ; 31 ; 57) se composant d'une chemise (11 ; 32 ; 62) et d'une aiguille (12 ; 33 ; 63, 65) qui forment ensemble, à l'état de fermeture, un siège d'étanchéité (14, 15 ; 35, 36 ; 68, 69, 70, 71) à l'orifice de la buse (13 ; 34 ; 67), caractérisé en ce qu'une chambre (20 ; 44 ; 78, 84) associée à l'extrémité arrière de l'aiguille (12 ; 33 ; 63, 65) de la buse communique avec le conduit (3, 4 ; 41 ; 53, 54) des composants réactionnels et en ce que l'aiguille (12 ; 33 ; 63, 65) de la buse comporte dans cette chambre (20 ; 44 ; 78, 84) une surface pouvant être exposée à une poussée dans le sens de la fermeture et dont la superficie (Fₛ ; F_{Is}, F_{IIs}), en projection dans la direction du déplacement, est au maximum 1,1 fois la superficie (Fₒ ; F_{Io}, F_{IIo}) en projection de l'aiguille (12 ; 33 ; 63, 65) de la buse sur laquelle les composants réactionnels peuvent exercer une poussée dans le sens de l'ouverture.

2. Dispositif selon la revendication 1, caractérisé en ce que les superficies en projection (Fₛ ; F_{Is}, F_{IIs} ainsi que Fₒ ; F_{Io}, F_{IIo}) qui sont orientées à l'opposé l'une de l'autre sont égales.

3. Dispositif selon la revendication 1 ou 2, caractérisé en ce que les buses d'injection consistent en une buse (57) commune à plusieurs matières, les aiguilles destinées au deuxième et éventuellement aux autres composants réactionnels étant conformées en aiguilles à douille (65) entourant concentriquement l'aiguille (63) destinée au premier composant réactionnel.
